# FASCICULE DE BREVET EUROPEEN

(11) **EP 3 147 212 B1**
(45) Date de publication et mention de la délivrance du brevet: **21.03.2018**
(21) Numéro de dépôt: 16186504.3
(22) Date de dépôt: 31.08.2016
(51) Int. Cl.: B64C 27/57, B64D 31/06

(54) **DISPOSITIF DE REGULATION DE LA VITESSE DE ROTATION D'UN ROTOR DE GIRAVION, GIRAVION EQUIPE D'UN TEL DISPOSITIF ET METHODE DE REGULATION ASSOCIEE**
VORRICHTUNG ZUR REGELUNG DER DREHZAHL DES ROTORS EINES DREHFLÜGELFLUGZEUGS, MIT EINER SOLCHEN VORRICHTUNG AUSGESTATTETES DREHFLÜGELFLUGZEUG UND ENTSPRECHENDE REGELUNGSMETHODE
A DEVICE FOR REGULATING THE SPEED OF ROTATION OF A ROTORCRAFT ROTOR, A ROTORCRAFT FITTED WITH SUCH A DEVICE, AND AN ASSOCIATED REGULATION METHOD

(30) Priorité: 25.09.2015 FR 1501994
(43) Date de publication de la demande: 29.03.2017
(73) Titulaire: Airbus Helicopters, 13725 Marignane Cedex (FR)
(72) Inventeur: VALLART, Jean-Baptiste, 13100 AIX EN PROVENCE (FR); TAHERI, Setareh, 13100 AIX EN PROVENCE (FR); CERTAIN, Nicolas, 13090 AIX EN PROVENCE (FR)
(74) Mandataire: GPI & Associés

(56) Documents cités:
- FR-A1- 2 974 564
- FR-A1- 2 981 045
- FR-A1- 3 000 466
- GB-A- 2 192 163

## Description

La présente invention concerne un dispositif de régulation de la vitesse de rotation, dite vitesse NR, d'au moins un rotor principal d'un giravion. Une telle vitesse NR est ainsi directement fonction de la quantité de carburant injectée dans le moteur pour produire une combustion destinée à entrainer en rotation le rotor principal.

Ainsi, la présente invention est également du domaine des méthodes de régulation du fonctionnement d'un ou des moteurs d'un groupe de motorisation équipant un giravion. Un tel groupe de motorisation comprend par exemple au moins un moteur principal à combustion, tel un turbomoteur notamment, fournissant classiquement au giravion la puissance mécanique nécessaire pour procurer au moins l'entraînement d'un ou de plusieurs rotors équipant le giravion.

Par suite, la présente invention s'inscrit plus spécifiquement dans le cadre d'un dispositif et d'une méthode de régulation procurant l'entraînement à une vitesse de consigne variable d'au moins un rotor principal du giravion, voire aussi procurant le cas échéant l'entraînement d'un rotor anticouple.

Le rotor principal procure typiquement au moins la sustentation du giravion, voire aussi sa propulsion et/ou son changement d'attitude en vol dans le cas spécifique d'un hélicoptère. Le rotor anticouple procure typiquement une stabilisation et un guidage du giravion en lacet et est couramment formé d'un rotor arrière ou d'au moins une hélice propulsive dans le cas d'un giravion à vitesses élevées d'avancement.

Classiquement, le fonctionnement des moteurs principaux du giravion est placé sous le contrôle d'une unité de régulation, telle qu'un FADEC (d'après l'acronyme anglais Full Authority Digital Engine Control). L'unité de régulation contrôle le dosage en carburant des moteurs principaux en fonction d'une consigne, ci-après désignée par consigne NR, relative à une vitesse de rotation requise du rotor principal. La consigne NR peut ainsi dans certains cas particuliers être générée par l'unité de régulation (FADEC). Dans d'autres cas particuliers où par exemple la consigne NR est variable, la consigne NR peut être générée par l'ensemble des équipements électroniques, électriques et informatiques du giravion puis transmise à l'unité de régulation (FADEC) par des moyens de gestion, tels un AFCS (d'après l'acronyme anglais Automatic Flight Control System). Dans ce cas, l'unité de régulation (FADEC) permet d'effectuer une régulation de la vitesse NR.

Ainsi, la consigne NR peut être transmise par les moyens de gestion (AFCS) en fonction des besoins en puissance mécanique du giravion identifiée selon le cas de vol courant du giravion, et notamment en fonction des besoins en puissance mécanique pour entraîner le rotor principal. La puissance consommée par le rotor principal peut être par exemple identifiée à partir d'une évaluation d'une part du couple résistant que le rotor principal oppose à l'encontre de son entraînement par le groupe de motorisation et d'autre part de sa vitesse de rotation.

Cependant, l'évolution des techniques dans le domaine des giravions tend à favoriser un entraînement du rotor principal à une vitesse NR commandée variable par rapport à la vitesse nominale NR1 prédéfinie selon les conditions les plus critiques pour le giravion correspondant par exemple à des procédures complexes de décollage ou d'atterrissage ponctuelles couramment désignées par l'expression de "procédures CAT A".

En effet, une telle variation significative de la vitesse NR d'entraînement du rotor principal est exploitée pour optimiser le niveau de puissance fournit par le moteur en fonction de la phase de vol associée par exemple pour réduire les nuisances sonores à proximité du sol et/ou améliorer les performances. A titre indicatif, la vitesse du rotor principal peut être commandée variable entre 5% et 10% de la vitesse nominale NR1, voire potentiellement davantage selon l'évolution des techniques, et plus particulièrement peut être commandée variable selon une plage de valeurs potentiellement comprise entre 90% et 115% de la vitesse nominale NR1.

On pourra à ce propos se reporter par exemple à la publication « Enhanced energy maneuverability for attack helicopters using continuous variable rotor speed control » (C.G. SCHAEFER Jr ; F.H. LUTZE, Jr ; 47th forum American Helicopter Society 1991 ; p. 1293-1303). Selon ce document, les performances d'un giravion en situation de combat sont améliorées en faisant varier la vitesse d'entraînement du rotor principal selon une variation de la vitesse air du giravion.

On pourra aussi se reporter par exemple au document US 6 198 991 (YAMAKAWA et al.), qui propose de réduire les nuisances sonores générées par un giravion en approche d'un point de posé en faisant varier la vitesse de rotation du rotor principal.

On pourra encore à ce propos se reporter par exemple au document US2007/118254 (BARNES G.W. et al.), qui propose de faire varier la vitesse de rotation du rotor principal d'un giravion, selon deux valeurs considérées comme basse et haute, sous conditions prédéfinies de seuils de valeurs de divers paramètres liés à des conditions de vol du giravion préalablement identifiées.

Par exemple encore, on pourra aussi se reporter à ce propos au document WO2010/143051 (AGUSTA SPA et al.), qui propose de faire varier la vitesse de rotation d'un rotor principal équipant un giravion conformément à une cartographie préalablement établie selon diverses conditions de vol du giravion.

Enfin, il est également connu, tel que décrit par le Demandeur dans le document FR 3 000 466, d'utiliser un altimètre pour commander automatiquement une variation de la vitesse de rotation d'un rotor dans une plage comprise entre 90% et 110% d'une valeur nominale prédéterminée.

Par ailleurs, les documents FR 2 974 564, GB 2 192 163 et FR 2 981 045 décrivent quant à eux d'autres dispositifs ou méthodes de régulation d'un rotor principal ou rotor arrière pour giravion.

Cependant, si de tels documents décrivent des dispositifs ou des méthodes de régulation de la vitesse NR lors du vol d'un giravion, de tels documents n'apportent aucune solution permettant de réaliser une régulation automatique de la vitesse NR durant les évolutions au sol d'un giravion et plus particulièrement lors des phases précédant le décollage ou suivant l'atterrissage d'un tel giravion.

La présente invention a alors pour objet de proposer un dispositif permettant de s'affranchir des limitations mentionnées ci-dessus. En particulier, un but du dispositif ou de la méthode de régulation conforme à l'invention est donc de permettre une régulation automatique de la vitesse NR d'un giravion lors de ses évolutions au sol afin notamment de limiter les nuisances sonores produites par celui-ci avant son décollage ou après son atterrissage. Une telle régulation automatique de la vitesse NR au sol permet ainsi notamment d'améliorer les conditions de travail pour les opérateurs évoluant à proximité immédiate du giravion lors de ses manoeuvres au sol et d'améliorer le confort sonore des passagers et de l'équipage durant les phases d'embarquement et de débarquement.

L'invention concerne donc un dispositif de régulation de la vitesse de rotation, dite vitesse NR, d'au moins un rotor principal d'un giravion, un tel giravion comportant :
- au moins un organe de commande manuelle de vol pour fournir une consigne de commande C du pas collectif des pales du rotor principal, la consigne de commande C étant fonction d'une position courante de l'organe de commande, et
- des moyens de détection permettant de détecter un état courant parmi au moins deux états distincts du giravion, à savoir un état "sol" dans lequel le giravion est en contact au moins partiellement avec le sol et un état "vol" dans lequel le giravion est au moins en sustentation dans les airs.

Selon l'invention, un tel dispositif de régulation de la vitesse NR est remarquable en ce qu'il comporte des moyens de gestion pour commander automatiquement la vitesse NR selon au moins deux vitesses prédéterminées NR1, NR2 distinctes l'une de l'autre, ces deux vitesses prédéterminées NR1, NR2 étant alternativement sélectionnées en fonction, d'une part, de la consigne de commande C fournie par l'organe de commande et, d'autre part, de l'état courant du giravion détecté par les moyens de détection. Les moyens de gestion permettent ainsi de commander la vitesse NR selon :
- une première vitesse NR1 lorsque la consigne de commande C fournie par l'organe de commande est supérieure à une première valeur de seuil prédéterminée C1,
- une deuxième vitesse NR2 inférieure à la première vitesse NR1 lorsque les deux conditions suivantes sont vérifiées :
   - la consigne de commande C fournie par l'organe de commande est inférieure ou égale à la première valeur de seuil prédéterminée C1, et
   - l'état courant détecté du giravion correspond à l'état "sol".

Autrement dit, le dispositif conforme à l'invention permet de réguler la vitesse de rotation NR d'un rotor lorsque le giravion est au sol et que le décollage n'est pas souhaité immédiatement. Le pilote du giravion peut en revanche souhaiter effectuer une manoeuvre de roulage sur une piste préalablement au décollage ou encore après un atterrissage. Un tel souhait peut alors être identifié grâce à la position de l'organe de commande représentative d'une consigne de commande C de pas collectif des pales, lorsque que cette consigne de commande C est inférieure ou égale à la première valeur de seuil prédéterminée C1.

En outre, un tel organe de commande manuelle de vol peut avantageusement être un levier ou un mini-manche de pas collectif, cet organe est adapté pour permettre de modifier simultanément l'orientation angulaire (le pas) des pales d'un rotor principal du giravion de façon identique pour chaque pale.

L'unité de régulation (FADEC) du dispositif de régulation permet quant à elle d'asservir la vitesse NR à une deuxième vitesse NR2 inférieure à la première vitesse NR1, dite vitesse nominale, et par conséquent de limiter les nuisances sonores générées par le rotor lorsque le giravion est au sol. En effet, il est immédiat que les nuisances sonores générées par un rotor de giravion sont réduites lorsque que la vitesse NR baisse.

Les moyens de gestion sont par exemple formés par un AFCS du giravion et comportent par exemple :
- au moins un capteur permettant d'effectuer une mesure par exemple de vitesse ou d'altitude du giravion,
- au moins un actionneur permettant par exemple de modifier une commande d'un rotor du giravion, et
- au moins un ordinateur ou calculateur permettant de traiter les informations issues du au moins un capteur de l'AFCS puis de générer un signal de commande pour piloter le au moins un actionneur de l'AFCS.

De tels moyens de gestion peuvent alors commander de façon autonome la vitesse NR selon la première vitesse NR1 ou la seconde vitesse NR2 en fonction de la consigne de commande C fournie par l'organe de commande et de l'état courant détecté du giravion.

Par ailleurs, pour déterminer l'état courant "sol" ou "vol" du giravion, un tel dispositif de régulation comporte des moyens de détection pouvant se présenter sous différentes formes.

Ainsi selon un exemple de réalisation particulier lorsque le giravion comporte des trains d'atterrissage indépendants, par exemple à roues, au moins l'un des trains d'atterrissage peut comporter au moins un capteur apte à mesurer une force de réaction du sol s'exerçant sur ce train d'atterrissage lorsque le giravion est en contact avec le sol.

Dans ce cas, le dispositif de régulation peut alors comparer la ou les forces de réaction mesurées par les différents capteurs avec des valeurs de seuil prédéterminées. Un état "sol" peut alors être identifié lorsque les forces de réaction mesurées par les différents capteurs sont chacune supérieures à la valeur de seuil. Par opposition, l'état "vol" peut quant à lui être par exemple identifié lorsque les forces de réaction mesurées par les capteurs sont chacune inférieures à la valeur de seuil.

Par ailleurs et selon d'autres exemples de réalisation particuliers, tels que par exemple lorsque le giravion comporte des patins d'atterrissage, les moyens de détection peuvent être choisis parmi le groupe comportant des anémomètres, des capteurs de position aptes à mesurer une position d'un levier de pas collectif ou encore des capteurs d'altitude. Ainsi, les données issues de ces différents moyens de détection peuvent alors permettre indirectement d'identifier l'état courant du giravion.

En outre, si une telle deuxième vitesse NR2 ne peut être utilisée en vol, elle peut en revanche être utilisée pour permettre au giravion de se déplacer sur le sol. Celui-ci peut en effet être amené à effectuer des déplacements de roulage sur une piste pour se rendre au point de décollage ou dans un hangar avec une vitesse NR inférieure à celle nécessaire en vol.

La vitesse NR passe alors à une vitesse NR2 comprise par exemple entre 92% et 98% de la vitesse nominale NR1 et peut plus particulièrement être égale à 95% de la vitesse nominale NR1.

En pratique, les moyens de gestion peuvent commander la vitesse NR selon une troisième vitesse NR3 inférieure à la deuxième vitesse NR2 lorsque la consigne de commande C fournie par l'organe de commande est inférieure ou égale à une deuxième valeur de seuil prédéterminée C2 et que l'état courant détecté du giravion correspond à l'état "sol", la deuxième valeur de seuil prédéterminée C2 étant inférieure à la première valeur de seuil prédéterminée C1.

En d'autres termes, lorsque l'organe de commande est agencé dans une position représentative d'une consigne de commande C inférieure ou égale à cette deuxième valeur de seuil prédéterminée C2 et que le giravion est au sol, l'unité de régulation permet de réduire encore la vitesse de rotation NR à la troisième vitesse NR3. Une telle troisième vitesse NR3 peut par exemple correspondre à une vitesse de rotation NR représentative d'un régime minimum régulé continu du groupe moteur. Dans ce cas, le giravion reste statique par rapport au sol et ne peut donc pas décoller.

Un tel dispositif de régulation permet alors de réaliser automatiquement, c'est-à-dire sans aucune intervention du pilote autre que la modification du niveau de pas collectif des pales du rotor principal conformément à la manoeuvre de décollage/atterrissage qu'il va effectuer, une réduction de la vitesse NR et par conséquent du niveau sonore d'un giravion lorsque celui-ci est au sol.

La vitesse NR passe alors à une vitesse NR3 comprise par exemple entre 90% et 95% de la vitesse nominale NR1 et peut plus particulièrement être égale à 92% de la vitesse nominale NR1.

Avantageusement, le giravion peut comporter un organe de sélection permettant, lorsqu'il est actionné par un pilote du giravion, de fournir manuellement une instruction aux moyens de gestion pour commander, au moins temporairement, la vitesse NR selon une quatrième vitesse NR4 supérieure à la première vitesse NR1.

Un tel organe de sélection peut consister en un commutateur ou un bouton poussoir, appelé couramment "bouton NR_HIGH", et étant agencé sur un panneau supérieur du cockpit du giravion. Une action manuelle opérée par le pilote sur ce commutateur permet alors d'augmenter la vitesse de rotation NR par exemple pour des procédures complexes de décollage ou d'atterrissage ponctuelles couramment désignées par l'expression de "procédures CAT A". La vitesse NR passe alors à une valeur NR4 comprise par exemple entre 102% et 108% de la vitesse nominale NR1 et peut plus particulièrement être égale à 105% de la vitesse nominale NR1.

Un tel agencement permet alors de disposer d'une vitesse NR importante uniquement lorsque le type de décollage ou d'atterrissage le justifie. L'utilisation du commutateur a alors cependant comme conséquence d'inhiber occasionnellement la fonction de réduction de bruit lorsque le giravion est au sol afin de garantir une puissance disponible maximale pour un décollage dans des conditions dynamiques critiques.

Par ailleurs, il est avantageux de se prémunir d'éventuelles sources possibles de risques d'accidents pour le giravion. De tels accidents pourraient en effet être causés par les moyens de gestion en cas de panne d'un moteur du giravion ou encore d'une erreur de détection de l'état courant du giravion par les moyens de détection.

Ainsi selon un mode de réalisation particulier, le dispositif peut comporter des moyens de vérification pour vérifier, à intervalle de temps régulier, un état de fonctionnement d'un moteur du giravion permettant d'entrainer en rotation le rotor principal. Ainsi, les moyens de vérification peuvent transmettre aux moyens de gestion une information représentative d'une panne du moteur pour permettre aux moyens de gestion d'inhiber une réduction de vitesse NR lorsque l'état courant détecté correspond à l'état "sol".

Les moyens de vérification sont par exemple formés par l'unité de régulation (FADEC) du giravion et peuvent notamment comporter :
- au moins un capteur permettant d'effectuer une mesure par exemple de régime de rotation, de température ou de couple d'un moteur du giravion,
- au moins un actionneur permettant par exemple de modifier le débit de carburant injecté dans la chambre de combustion du moteur considéré du giravion, et
- au moins un ordinateur ou calculateur permettant de traiter les informations issues du au moins un capteur du FADEC puis de générer un signal de commande pour piloter le au moins un actionneur du FADEC.

De cette manière, quelle que soit la position de l'organe de commande et donc le niveau de la consigne issue de cet organe de commande, en cas de panne du moteur, les moyens de gestion commandent la vitesse NR selon la première vitesse NR1.

En pratique, le dispositif peut comporter des moyens de calcul pour calculer, à intervalle de temps régulier, une vitesse absolue de déplacement du giravion, les moyens de gestion permettant de commander la vitesse NR selon :
- la première vitesse NR1 lorsque les deux conditions suivantes sont vérifiées :
   - l'état courant détecté du giravion correspond à l'état "sol",
   - la vitesse absolue de déplacement du giravion est supérieure à une vitesse absolue de déplacement prédéterminée V1,
- la deuxième vitesse NR2 lorsque les trois conditions suivantes sont vérifiées :
   - la consigne de commande C fournie par l'organe de commande est inférieure ou égale à la première valeur de seuil prédéterminée C1,
   - l'état courant détecté du giravion correspond à l'état "sol", et
   - la vitesse absolue de déplacement du giravion est inférieure ou égale à la vitesse absolue de déplacement prédéterminée V1.

De cette façon, quelle que soit la position de l'organe de commande et donc le niveau de la consigne issue de cet organe de commande, on peut se prémunir d'une information erronée détectée par les moyens de détection en venant consolider la détection de l'état courant par d'autres paramètres tels que notamment la vitesse absolue de déplacement du giravion qui, lorsqu'elle est mesurée supérieure à une vitesse absolue de déplacement prédéterminée V1 égale à 40 kts par exemple, les moyens de gestion commandent la vitesse NR selon la première vitesse NR1. Une telle vitesse absolue de déplacement du giravion est généralement calculée par les moyens de calcul à partir de données anémométriques.

Ces données anémométriques sont quant à elles issues de capteurs tels que par exemple des anémomètres unidirectionnels tels des sondes ou tubes de Pitot ou des anémomètres omnidirectionnels positionnés sur le giravion.

Ainsi, de tels moyens de calcul peuvent notamment comporter :
- au moins un anémomètre permettant d'effectuer une mesure de vitesse du giravion qui selon un exemple particulier peut être confondu avec le au moins un capteur de l'AFCS, et
- au moins un ordinateur ou calculateur permettant de traiter les informations issues du au moins un anémomètre qui selon un exemple particulier peut également être confondu avec le au moins un ordinateur ou calculateur de l'AFCS.

Avantageusement, le dispositif peut comporter des moyens de mesure pour mesurer, à intervalle de temps régulier, une altitude du giravion par rapport au sol, les moyens de gestion permettant de commander la vitesse NR selon :
- la première vitesse NR1 lorsque les deux conditions suivantes sont vérifiées :
   - l'état courant détecté du giravion correspond à l'état "sol",
   - l'altitude du giravion par rapport au sol est supérieure à une altitude prédéterminée A1,
- la seconde vitesse NR2 lorsque les trois conditions suivantes sont vérifiées :
   - la consigne de commande C fournie par l'organe de commande est inférieure ou égale à la première valeur de seuil prédéterminée C1,
   - l'état courant détecté du giravion correspond à l'état "sol", et
   - l'altitude du giravion par rapport au sol est inférieure ou égale à l'altitude prédéterminée A1.

De cette manière, quelle que soit la position de l'organe de commande et donc le niveau de la consigne issue de cet organe de commande, on peut se prémunir d'une information erronée détectée par les moyens de détection en venant consolider la détection de l'état courant par d'autres paramètres tels que notamment l'altitude du giravion qui, lorsqu'elle est mesurée supérieure à une altitude prédéterminée A1 égale à 10 ft par exemple, les moyens de gestion commandent la vitesse NR selon la première vitesse NR1. Une telle altitude du giravion par rapport sol est généralement calculée par des moyens de mesure comportant notamment des capteurs d'altitude, tels des radiosondes, positionnés au niveau de la poutre de queue du giravion et orientés vers le sol.

Comme précédemment, de tels moyens de mesure peuvent notamment comporter :
- au moins un capteur d'altitude permettant d'effectuer une mesure d'altitude du giravion qui selon un exemple particulier peut être confondu avec le au moins un capteur de l'AFCS, et
- au moins un ordinateur ou calculateur permettant de traiter les informations issues du au moins un capteur d'altitude qui selon un exemple particulier peut également être confondu avec le au moins un ordinateur ou calculateur de l'AFCS.

Selon un mode de réalisation particulier, la première valeur de seuil prédéterminée C1 peut être inscrite dans une plage de valeurs comprise entre 30 et 60% d'une consigne maximale correspondant à une position extrémale de l'organe de commande.

Autrement dit, une telle plage de valeurs pour la première valeur de seuil prédéterminée C1 correspond ainsi à une position sensiblement médiane ou centrale sur la course de déplacement de l'organe de commande.

En pratique, la deuxième valeur de seuil prédéterminée C2 peut être inscrite dans une plage de valeurs comprise entre 15 et 40% d'une consigne maximale correspondant à une position extrémale de l'organe de commande.

En d'autres termes, une telle plage de valeurs pour la deuxième valeur de seuil prédéterminée C2 correspond dans ce cas à une position sensiblement extrémale ou minimale sur la course de déplacement de l'organe de commande.

Comme déjà évoqué, l'invention se rapporte également à un giravion comportant :
- au moins un rotor principal entrainé par au moins un moteur,
- au moins un organe de commande manuelle de vol pour fournir une consigne de commande C du pas collectif des pales du rotor principal, une telle consigne de commande C étant fonction d'une position courante de l'organe de commande, et
- des moyens de détection permettant de détecter un état courant parmi au moins deux états distincts du giravion, à savoir un état "sol" dans lequel le giravion est en contact au moins partiellement avec le sol et un état "vol" dans lequel le giravion est au moins en sustentation dans les airs.

Selon l'invention, un tel giravion est remarquable en ce qu'il comporte un dispositif de régulation de la vitesse NR tel que décrit précédemment.

Autrement dit, le giravion est équipé d'un dispositif de régulation permettant de réguler la vitesse de rotation NR d'un rotor lorsque le giravion est au sol et quand le pilote ne souhaite pas réaliser un décollage immédiatement mais souhaite uniquement par exemple se déplacer en roulant sur la piste. Un tel souhait est alors identifié grâce à la position de l'organe de commande représentative d'une consigne de commande C de pas collectif des pales inférieure ou égale à la première valeur de seuil prédéterminée C1.

Enfin, l'invention concerne également une méthode de régulation de la vitesse de rotation, dite vitesse NR, d'au moins un rotor principal d'un giravion, une telle méthode comportant au moins les étapes suivantes :
- une étape de commande manuelle de vol pour fournir une consigne de commande C du pas collectif des pales du rotor principal, la consigne de commande C étant quant à elle fonction d'une position courante d'un organe de commande,
- une étape de détection consistant à détecter un état courant parmi au moins deux états distincts du giravion, à savoir un état "sol" dans lequel le giravion est en contact au moins partiellement avec le sol et un état "vol" dans lequel le giravion est au moins en sustentation dans les airs.

Selon l'invention, la méthode est remarquable en ce que, après l'étape de commande manuelle et après l'étape de détection, la méthode comporte une étape de gestion consistant à commander automatiquement la vitesse NR selon au moins deux vitesses prédéterminées NR1, NR2 distinctes l'une de l'autre, ces deux vitesses prédéterminées NR1, NR2 étant alternativement sélectionnées en fonction, d'une part, de la consigne de commande C fournie par l'organe de commande et, d'autre part, de l'état courant détecté du giravion. Une telle étape de gestion permet ainsi de commander la vitesse NR selon :
- une première vitesse NR1 lorsque la consigne de commande C fournie par l'organe de commande est supérieure à une première valeur de seuil prédéterminée C1,
- une deuxième vitesse NR2 inférieure à la première vitesse NR1 lorsque les deux conditions suivantes sont vérifiées :
   - la consigne de commande C fournie par l'organe de commande est inférieure ou égale à la première valeur de seuil prédéterminée C1, et
   - l'état courant détecté du giravion correspond à l'état "sol".

En d'autres termes, l'étape de gestion permet de commander la vitesse NR automatiquement entre une vitesse première NR1 et une deuxième vitesse NR2 ou inversement en fonction de la position de l'organe de commande et de l'état courant détecté du giravion lors de l'étape de détection.

Une telle méthode est ainsi adaptée pour réduire automatiquement le niveau sonore généré par un giravion et plus précisément par la rotation de son rotor principal pour certaines opérations au sol notamment de roulage sur une piste préalablement au décollage ou après l'atterrissage.

Avantageusement, l'étape de gestion peut commander la vitesse NR selon une troisième vitesse NR3 inférieure à la deuxième vitesse NR2 lorsque la consigne de commande C fournie par l'organe de commande est inférieure ou égale à une deuxième valeur de seuil prédéterminée C2 et quand l'état courant détecté du giravion correspond à l'état "sol", la deuxième valeur de seuil prédéterminée C2 étant inférieure à la première valeur de seuil prédéterminée C1.

Dans ce cas, l'étape de gestion permet de réduire encore plus la commande de la vitesse NR à une vitesse NR3 inférieure à la vitesse nominale NR1. Une telle vitesse NR3 peut par exemple être représentative d'un régime minimum régulé continu du groupe moteur lors duquel le giravion est statique par rapport au sol.

Selon un mode de réalisation particulier, l'étape de gestion peut commander la vitesse NR, au moins temporairement, selon une quatrième vitesse NR4 supérieure à la première vitesse NR1 lorsqu'un organe de sélection est actionné manuellement par un pilote, un tel organe de sélection étant agencé au niveau d'un panneau supérieur du cockpit du giravion.

De cette manière, l'étape de gestion permet d'augmenter temporairement la vitesse NR à une vitesse NR4 supérieure à la vitesse nominale NR1 et d'inhiber la loi de pilotage correspondant à l'état "sol" pour assurer les performances au stationnaire indépendamment de la dynamique de décollage commandée par le pilote.

En pratique, la méthode peut comporter une étape de vérification pour vérifier, à intervalle de temps régulier, un état de fonctionnement d'un moteur du giravion permettant d'entrainer en rotation le rotor principal. L'étape de vérification transmet alors à l'étape de gestion une information représentative d'une panne moteur pour permettre à l'étape de gestion d'inhiber une réduction de vitesse NR lorsque l'état courant détecté correspond à l'état "sol".

Ainsi, une telle méthode de régulation permet d'éviter une réduction de la commande de vitesse NR lors d'une panne de moteur du giravion. Dans ce cas, peu importe la position de l'organe de commande ou même l'état courant détecté du giravion, l'étape de gestion commande la vitesse NR à la vitesse nominale NR1.

Avantageusement, la méthode peut comporter une étape de calcul pour calculer, à intervalle de temps régulier, une vitesse absolue de déplacement du giravion. L'étape de gestion permet alors de commander la vitesse NR selon :
- la première vitesse NR1 lorsque les deux conditions suivantes sont vérifiées :
   - l'état courant détecté du giravion correspond à l'état "sol",
   - la vitesse absolue de déplacement du giravion est supérieure à une première vitesse absolue de déplacement prédéterminée V1,
- la deuxième vitesse NR2 lorsque les trois conditions suivantes sont vérifiées :
   - la consigne de commande C fournie par l'organe de commande est inférieure ou égale à la première valeur de seuil prédéterminée C1,
   - l'état courant détecté du giravion correspond à l'état "sol", et
   - la vitesse absolue de déplacement du giravion est inférieure ou égale à la vitesse absolue de déplacement prédéterminée V1.

Autrement dit, une telle étape de calcul de la vitesse absolue du giravion est apte à éviter un asservissement de la vitesse NR à la deuxième vitesse NR2 si la vitesse de déplacement du giravion est supérieure à la vitesse absolue de déplacement prédéterminée V1. Cette vitesse de déplacement est alors représentative d'une vitesse de déplacement en vol et peut par conséquent inhiber une erreur de détection d'un état courant du giravion correspondant à l'état "sol".

Par ailleurs, la méthode peut comporter une étape de mesure pour mesurer, à intervalle de temps régulier, une altitude du giravion par rapport au sol, l'étape de gestion permettant de commander la vitesse NR selon :
- la première vitesse NR1 lorsque les deux conditions suivantes sont vérifiées :
   - l'état courant détecté du giravion correspond à l'état "sol",
   - l'altitude du giravion par rapport au sol est supérieure à une altitude prédéterminée A1,
- la deuxième vitesse NR2 lorsque les trois conditions suivantes sont vérifiées :
   - la consigne de commande C fournie par l'organe de commande est inférieure ou égale à ladite première valeur de seuil prédéterminée C1,
   - l'état courant détecté dudit giravion correspond à l'état "sol", et
   - l'altitude du giravion par rapport au sol est inférieure ou égale à l'altitude prédéterminée A1.

Par suite, une telle étape de mesure de l'altitude du giravion est apte à éviter une commande de la vitesse NR à la deuxième vitesse NR2 si l'altitude du giravion par rapport au sol est supérieure à l'altitude prédéterminée A1. Cette altitude du giravion est alors représentative d'une position en vol du giravion et peut par conséquent inhiber une erreur de détection d'un état courant du giravion correspondant à l'état "sol".

L'invention et ses avantages apparaîtront avec plus de détails dans le cadre de la description qui suit avec des exemples donnés à titre indicatif mais non limitatif à l'appui des figures annexées dans lesquelles :
- la figure 1 est une représentation schématique en vue de côté d'un giravion conforme à l'invention,
- la figure 2 est un schéma de principe d'un dispositif de régulation conforme à l'invention,
- la figure 3 à 5 sont des courbes illustrant les différentes phases de régulation de la vitesse de rotation NR d'un rotor principal de giravion, conformément à l'invention et
- la figure 6 est une représentation schématique d'une méthode de régulation conforme à l'invention.

Les éléments présents dans plusieurs figures distinctes sont affectés d'une seule et même référence.

Comme déjà évoqué précédemment, l'invention se rapporte au domaine des giravions comportant au moins un rotor principal permettant de réaliser au moins la sustentation du giravion.

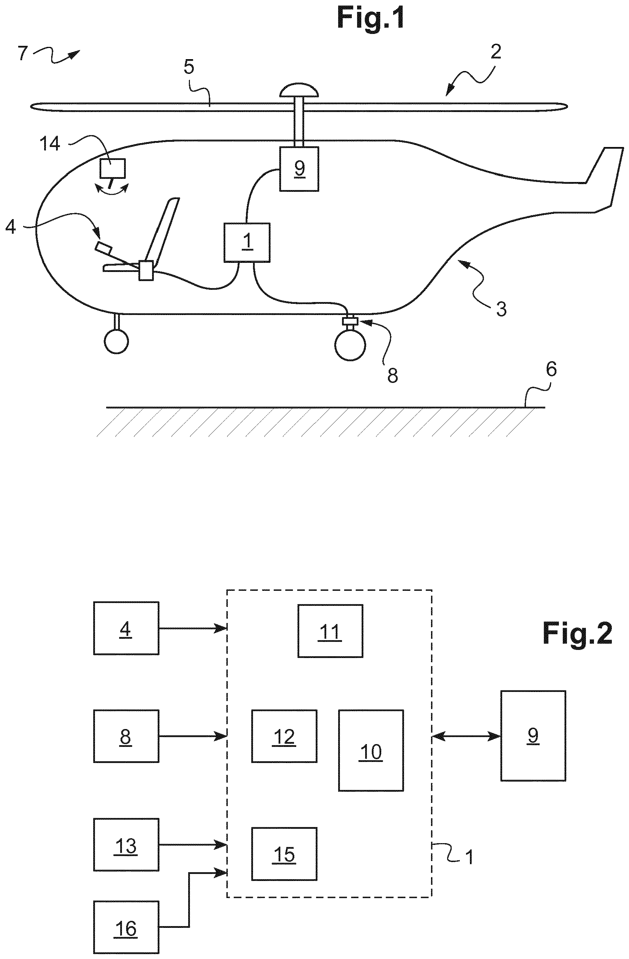

Tel que représenté à la figure 1, un tel giravion 3 comporte un dispositif de régulation 1 de la vitesse NR de rotation du rotor principal 2. Un tel dispositif de régulation 1 est donc apte à générer et transmettre une consigne de commande C à un moteur 9 entrainant en rotation le rotor principal 2.

Par ailleurs, un tel dispositif de régulation 1 est relié, par exemple électriquement par voie filaire ou par un moyen de communication sans fil, à un organe de commande manuelle 4 de vol. Un tel organe de commande 4 permet alors de fournir au dispositif de régulation 1 au moins une consigne de commande C du pas collectif des pales 5 du rotor 2. Cette consigne de commande C est alors fonction d'une position courante de l'organe de commande 4 déplacé selon un mouvement de rotation tel un levier de pas collectif de giravion par un pilote de celui-ci.

De plus, un tel giravion 3 peut comporter, au niveau d'un panneau supérieur de cockpit, un organe de sélection 14 permettant d'inhiber temporairement la consigne de commande C fournie par l'organe de commande 4 pour asservir manuellement la commande de la vitesse NR à un niveau prédéterminé associé à des procédures opérationnelles spécifiques.

Au surplus, un tel giravion 3 comporte des moyens de détection 8 permettant de détecter un état courant du giravion 3 parmi deux états possibles à savoir un état "vol" dans lequel le giravion est au moins en sustentation dans les airs 7 et un état "sol" dans lequel le giravion 3 est en contact au moins partiel avec le sol.

De tels moyens de détection 8 peuvent ainsi consister notamment en des capteurs d'efforts pour mesurer toute sollicitation mécanique au niveau d'au moins un train d'atterrissage du giravion 3. Ces capteurs d'effort sont ainsi également reliés électriquement au dispositif de régulation 1 afin de lui transmettre des informations relatives à l'état courant "sol" ou "vol" du giravion 3.

Comme déjà évoqué, les moyens de détection 8 peuvent, selon d'autres exemples de réalisation particuliers, tels que par exemple lorsque le giravion 3 comporte des patins d'atterrissage, être choisis parmi le groupe comportant des anémomètres, des capteurs de position aptes à mesurer une position d'un levier de pas collectif ou encore des capteurs d'altitude.

Tel que représenté à la figure 2 et comme déjà indiqué précédemment à la figure 1, le dispositif de régulation 1 est donc connecté à l'organe de commande 4 et aux moyens de détection 8 afin de réguler la vitesse NR du rotor 2 et donc le régime de rotation du moteur 9.

Ainsi, un tel dispositif de régulation 1 comporte des moyens de gestion 10 permettant de commander automatiquement la vitesse NR selon au moins deux vitesses prédéterminées NR1 et NR2 distinctes l'une de l'autre pour modifier et réduire la vitesse de rotation du rotor 2 lorsque la puissance nécessaire n'est pas maximale c'est-à-dire notamment lors des déplacements au sol du giravion 3.

De plus, et afin d'éviter certains risques d'accident, un tel dispositif de régulation 1 peut également comporter des moyens de vérification 11 permettant de vérifier le bon fonctionnement du moteur 9. De tels moyens de vérification 11 sont ainsi reliés aux moyens de gestion 10 pour commander la vitesse NR à la première vitesse NR1 en cas de panne du moteur 9.

Ainsi, en cas de panne du moteur 9, les moyens de gestion 10 permettent d'inhiber une réduction de la vitesse NR lorsque l'état courant détecté correspond à l'état "sol".

En outre, le dispositif de régulation 1 comporte également des moyens de calcul 12 permettant notamment de calculer une vitesse absolue de déplacement du giravion 3. En fonction de la vitesse calculée, le dispositif de régulation 1 peut alors adapter la commande de la vitesse NR et éviter que les moyens de gestion 10 commandent la vitesse NR selon la deuxième vitesse NR2 au delà d'une vitesse absolue de déplacement prédéterminée V1 par exemple égale à 40 kts.

Pour ce faire, au moins un anémomètre 13 peut transmettre au dispositif de régulation 1 des informations représentatives d'une vitesse du flux d'air circulant dans l'environnement immédiat du giravion 3.

Par ailleurs, le dispositif de régulation 1 comporte également des moyens de mesure 15 permettant de mesurer une altitude du giravion 3 et de comparer cette altitude courante du giravion avec une altitude prédéterminée A1. En fonction de l'altitude mesurée, le dispositif de régulation 1 peut alors adapter la commande de la vitesse NR et éviter que les moyens de gestion 10 commandent la vitesse NR selon la deuxième vitesse NR2 au delà de l'altitude prédéterminée A1 par exemple égale à 10 ft.

Pour ce faire, au moins une radiosonde 16 peut transmettre au dispositif de régulation 1 des informations représentatives d'une altitude du giravion 3 par rapport au sol.

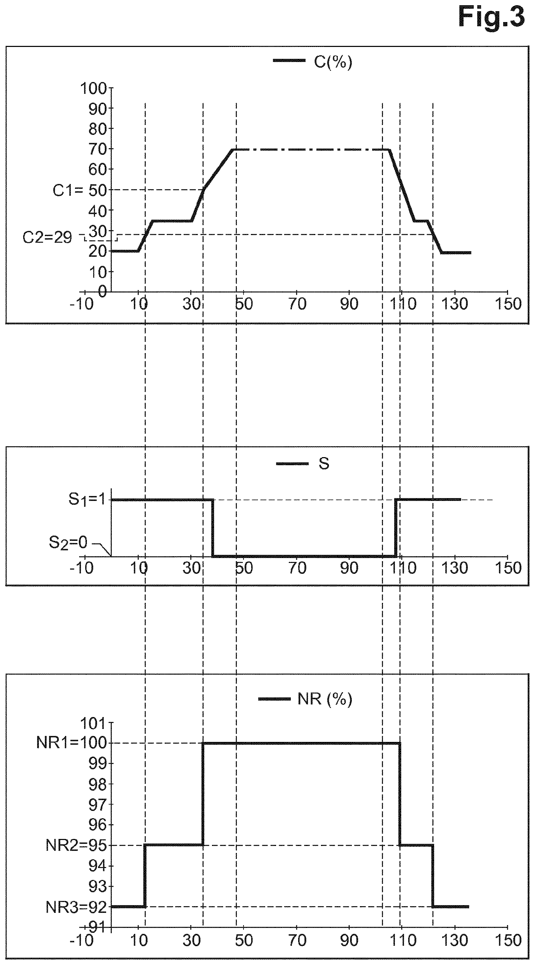

Comme déjà évoqué et tel que représenté à la figure 3, la consigne de commande C fournie par l'organe de commande 4 et l'état courant "sol" permettent de modifier automatiquement la consigne de la vitesse NR selon différentes vitesses prédéterminées NR1, NR2 ou NR3. La courbe S est ainsi représentative de l'état courant "sol" et vaut la valeur S1 égale à 1 lorsque l'état courant "sol" du giravion 3 est identifié ou la valeur S2 égale à 0 lorsque l'état courant "vol" du giravion 3 est identifié.

Ainsi, lorsque la consigne de commande C est supérieure à une première valeur de seuil prédéterminée C1, les moyens de gestion 10 commandent la vitesse NR selon la première vitesse NR1 correspondant à la vitesse NR nominale du rotor 2 du giravion 3 pour permettre son vol ou son envol.

Cependant, si la consigne de commande C est inférieure ou égale à cette première valeur de seuil prédéterminée C1 et que l'état courant du giravion 3 correspond à l'état "sol" représenté par la valeur S1 sur la courbe S représentative d'une confirmation de l'état "sol", les moyens de gestion 10 commandent la vitesse NR selon la deuxième vitesse NR2 inférieure à la première vitesse NR1.

De cette manière, lorsque le pilote du giravion 3 souhaite par exemple réaliser un déplacement du giravion 3 sur une piste et non un décollage, la vitesse NR peut rester au niveau NR2 limitant ainsi les nuisances sonores produites par la rotation du rotor 2. Pour ce faire le pilote peut alors positionner l'organe de commande 4 de telle manière qu'il fournisse une consigne de commande C inférieure à la première valeur de seuil prédéterminée C1.

De même, lorsque la consigne de commande C est encore réduite et devient inférieure ou égale à une deuxième valeur de seuil prédéterminée C2 et que l'état courant du giravion 3 correspond à l'état "sol" représenté par la valeur S1 sur la courbe S représentative d'une confirmation de l'état "sol", les moyens de gestion 10 commandent alors automatiquement la vitesse NR selon une troisième vitesse NR3 inférieure à la première vitesse NR1 et à la deuxième vitesse NR2.

Un tel cas de figure peut par exemple se produire lorsque le pilote souhaite rester immobile sur une piste, notamment lors d'une phase d'attente du giravion 3. Une telle vitesse NR3 peut ainsi correspondre à un régime minimum régulé continu du moteur 9.

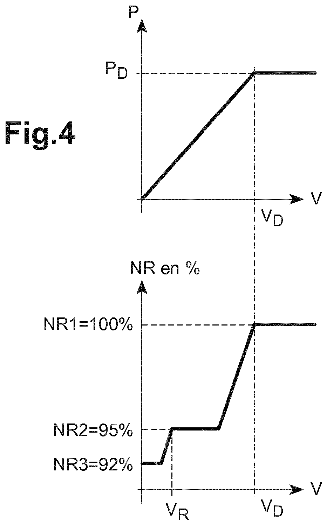

Par ailleurs tel que représenté à la figure 4, les moyens de calcul 12 transmettent la vitesse absolue V de déplacement du giravion 3 aux moyens de gestion 10 en fonction de la puissance P nécessaire au cas de vol.

Comme déjà évoqué précédemment, les seconde et troisième vitesses NR2, NR3 sont commandées par les moyens de gestion 10 lorsque le giravion 3 est au sol. La vitesse absolue V de déplacement du giravion 3 est alors inférieure à une vitesse VD qui ne peut être atteinte qu'après un décollage du giravion 3.

Ainsi la seconde vitesse NR2 permet de réaliser des opérations de roulage sur la piste à une vitesse absolue de roulage supérieure à VR. La troisième vitesse NR3 permet uniquement de faire tourner le rotor 2 à un régime minimum régulé sans déplacement possible pour le giravion 3 par rapport au sol et donc sa vitesse de déplacement V est minimale.

La première vitesse NR1 permet quant à elle un décollage du giravion 3. A cette première vitesse NR1, le rotor fournit alors une puissance PD permettant de faire décoller le giravion 3 et ainsi d'atteindre la vitesse de décollage VD supérieure à la vitesse de roulage VR

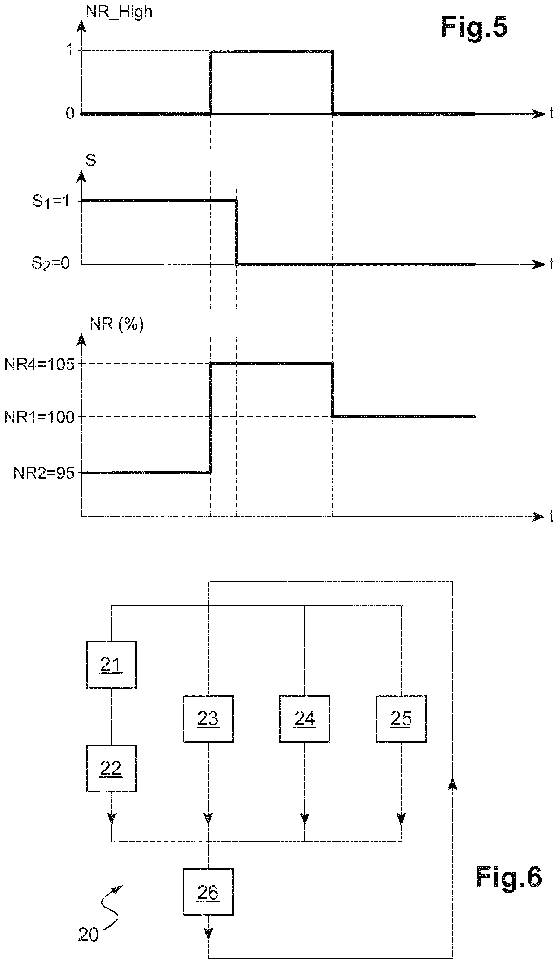

Tel que représenté à la figure 5, et comme déjà évoqué à la figure 1, le giravion 3 peut comporter un organe de sélection 14 permettant de fournir un signal NR_HIGH au dispositif de régulation 1. La courbe représentative de ce signal NR_HIGH est alors égale à 1 lorsqu'il est activé

Ainsi, si le pilote du giravion 3 actionne l'organe de sélection 14, alors les moyens de gestion 10 inhibent les lois de commande propre à l'état "sol" et commandent, au moins temporairement, la vitesse NR selon une quatrième vitesse NR4 supérieure à la première vitesse NR1.

L'utilisation d'un tel organe de sélection 14 peut se révéler nécessaire pour certains types de décollage ou d'atterrissage nécessitant notamment une puissance maximale du rotor principal 2. Le signal NR_HIGH peut en outre être actionné lorsque la courbe S représentative d'une confirmation de l'état "sol" vaut la valeur S1 égale à 1.

Telle que représentée à la figure 6, l'invention se rapporte également à une méthode de régulation 20 de la vitesse NR de rotation du rotor 2 de giravion 3.

Une telle méthode de régulation 20 comporte ainsi au moins une étape de commande 21 permettant de fournir une consigne de commande C représentative d'une position courante de l'organe de commande 4. La méthode comporte également au moins une étape de détection 22 consistant à détecter un état courant du giravion parmi au moins deux états à savoir un état "sol" et un état "vol".

Par ailleurs, une telle méthode 20 comporte également une étape de gestion 26 pour commander la vitesse NR suivant au moins deux vitesses prédéterminées NR1 et NR2 comme déjà explicitées à la figure 3.

En outre, la méthode de régulation 20 peut également comporter à titre auxiliaire d'autres étapes visant notamment à réduire les risques d'accident d'un tel giravion en cas de disfonctionnement des moyens de détection 8 mis en oeuvre lors de l'étape de détection 22.

Ainsi, une étape de vérification 23 peut permettre de vérifier l'état de fonctionnement courant du moteur 9 et permet alors d'inhiber une réduction de la vitesse NR en cas de panne du moteur 9 avec un état courant détecté correspondant à l'état "sol".

De même, une étape de calcul 24 permet de calculer la vitesse absolue de déplacement du giravion 3. De cette manière, on peut s'assurer que lorsque l'état courant détecté correspond à un état "sol", le giravion n'est pas en mouvement dans les airs à une vitesse supérieure à une vitesse absolue de déplacement prédéterminée V1. Une telle sécurité permet ainsi d'éviter de réaliser lors de l'étape de gestion 26 une réduction de la vitesse NR à la deuxième vitesse NR2 en cas de disfonctionnement d'un moyen de détection 8.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif de régulation (1) de la vitesse de rotation, dite vitesse NR, d'au moins un rotor principal (2) d'un giravion (3), ledit giravion (3) comportant :
• au moins un organe de commande manuelle (4) de vol pour fournir une consigne de commande C du pas collectif des pales (5) dudit au moins un rotor principal (2), ladite consigne de commande C étant fonction d'une position courante dudit au moins un organe de commande (4), et
• des moyens de détection (8) permettant de détecter un état courant parmi au moins deux états distincts dudit giravion (3), à savoir un état "sol" dans lequel ledit giravion (3) est en contact au moins partiellement avec le sol (6) et un état "vol" dans lequel ledit giravion (3) est au moins en sustentation dans les airs (7),
**caractérisé en ce que** ledit dispositif de régulation de la vitesse NR comporte des moyens de gestion (10) pour commander automatiquement la vitesse NR selon au moins deux vitesses prédéterminées NR1, NR2 distinctes l'une de l'autre, lesdites au moins deux vitesses prédéterminées NR1, NR2 étant alternativement sélectionnées en fonction, d'une part, de ladite consigne de commande C fournie par l'organe de commande (4) et, d'autre part, de l'état courant dudit giravion (3) détecté par lesdits moyens de détection (8), lesdits moyens de gestion (10) permettant de commander la vitesse NR selon :
• une première vitesse NR1 lorsque la consigne de commande C fournie par l'organe de commande (4) est supérieure à une première valeur de seuil prédéterminée C1,
• une deuxième vitesse NR2 inférieure à ladite première vitesse NR1 lorsque les deux conditions suivantes sont vérifiées :
- la consigne de commande C fournie par l'organe de commande (4) est inférieure ou égale à ladite première valeur de seuil prédéterminée C1, et
- l'état courant détecté dudit giravion (3) correspond audit état "sol".

2. Dispositif selon la revendication 1,
**caractérisé en ce que** lesdits moyens de gestion (10) commandent la vitesse NR selon une troisième vitesse NR3 inférieure à ladite deuxième vitesse NR2 lorsque la consigne de commande C fournie par l'organe de commande (4) est inférieure ou égale à une deuxième valeur de seuil prédéterminée C2 et quand l'état courant détecté dudit giravion (3) correspond audit état "sol", ladite deuxième valeur de seuil prédéterminée C2 étant inférieure à ladite première valeur de seuil prédéterminée C1.

3. Dispositif selon l'une quelconque des revendications 1 à 2,
**caractérisé en ce que** ledit giravion (3) comporte un organe de sélection (14) permettant, lorsque ledit organe de sélection (14) est actionné par un pilote dudit giravion, de fournir manuellement une instruction auxdits moyens de gestion (10) pour commander, au moins temporairement, ladite vitesse NR selon une quatrième vitesse NR4 supérieure à ladite première vitesse NR1.

4. Dispositif selon l'une quelconque des revendications 1 à 3,
**caractérisé en ce que** ledit dispositif (1) comporte des moyens de vérification (11) pour vérifier, à intervalle de temps régulier, un état de fonctionnement d'un moteur (9) dudit giravion (3) permettant d'entrainer en rotation ledit au moins un rotor principal (2), lesdits moyens de vérification (11) étant aptes à transmettre auxdits moyens de gestion (10) une information représentative d'une panne du moteur pour permettre auxdits moyens de gestion (10) d'inhiber une réduction de la vitesse NR lorsque l'état courant détecté correspond à l'état "sol".

5. Dispositif selon l'une quelconque des revendications 1 à 4,
**caractérisé en ce que** ledit dispositif comporte des moyens de calcul (12) pour calculer, à intervalle de temps régulier, une vitesse absolue de déplacement dudit giravion (3), lesdits moyens de gestion (10) permettant de commander la vitesse NR selon :
• ladite première vitesse NR1 lorsque les deux conditions suivantes sont vérifiées :
- l'état courant détecté du giravion correspond à l'état "sol",
- la vitesse absolue de déplacement du giravion (3) est supérieure à une vitesse absolue de déplacement prédéterminée V1,
• ladite seconde vitesse NR2 lorsque les trois conditions suivantes sont vérifiées :
- la consigne de commande C fournie par l'organe de commande (4) est inférieure ou égale à ladite première valeur de seuil prédéterminée C1,
- l'état courant détecté dudit giravion (3) correspond audit état "sol", et
- la vitesse absolue de déplacement du giravion (3) est inférieure ou égale à ladite vitesse absolue de déplacement prédéterminée V1.

6. Dispositif selon l'une quelconque des revendications 1 à 5, **caractérisé en ce que** ledit dispositif comporte des moyens de mesure (15) pour mesurer, à intervalle de temps régulier, une altitude dudit giravion (3) par rapport au sol, lesdits moyens de gestion (10) permettant de commander la vitesse NR selon :
• ladite première vitesse NR1 lorsque les deux conditions suivantes sont vérifiées :
- l'état courant détecté du giravion correspond à l'état "sol",
- l'altitude du giravion (3) par rapport au sol est supérieure à une altitude prédéterminée A1,
• ladite seconde vitesse NR2 lorsque les trois conditions suivantes sont vérifiées :
- la consigne de commande C fournie par l'organe de commande (4) est inférieure ou égale à ladite première valeur de seuil prédéterminée C1,
- l'état courant détecté dudit giravion (3) correspond audit état "sol", et
- l'altitude du giravion (3) par rapport au sol est inférieure ou égale à ladite altitude prédéterminée A1.

7. Dispositif selon l'une quelconque des revendications 1 à 6,
**caractérisé en ce que** ladite première valeur de seuil prédéterminée C1 est inscrite dans une plage de valeurs comprise entre 30 et 60% d'une consigne maximale correspondant à une position extrémale de l'organe de commande (4).

8. Dispositif selon la revendication 2,
**caractérisé en ce que** ladite deuxième valeur de seuil prédéterminée C2 est inscrite dans une plage de valeurs comprise entre 15 et 40% d'une consigne maximale correspondant à une position extrémale de l'organe de commande (4).

9. Giravion (3) comportant :
• au moins un rotor principal (2) entrainé par au moins un moteur (9),
• au moins un organe de commande manuelle (4) de vol pour fournir une consigne de commande C du pas collectif des pales (5) dudit au moins un rotor principal (2), ladite consigne de commande C étant fonction d'une position courante dudit au moins un organe de commande (4), et
• des moyens de détection (8) permettant de détecter un état courant parmi au moins deux états distincts dudit giravion (3), à savoir un état "sol" dans lequel ledit giravion (3) est en contact au moins partiellement avec le sol (6) et un état "vol" dans lequel ledit giravion (3) est au moins en sustentation dans les airs (7),
**caractérisé en ce que** ledit giravion (3) comporte un dispositif de régulation (1) de la vitesse NR selon l'une quelconque des revendications 1 à 8.

10. Méthode de régulation (20) de la vitesse de rotation, dite vitesse NR, d'au moins un rotor principal (2) d'un giravion (3), ladite méthode (20) comportant au moins les étapes consistant en :
• une étape de commande manuelle (21) de vol pour fournir une consigne de commande C du pas collectif des pales (5) dudit au moins un rotor principal (2), ladite consigne de commande C étant fonction d'une position courante d'au moins un organe de commande (4),
• une étape de détection (22) consistant à détecter un état courant parmi au moins deux états distincts dudit giravion (3), à savoir un état "sol" dans lequel ledit giravion (3) est en contact au moins partiellement avec le sol (6) et un état "vol" dans lequel ledit giravion (3) est au moins en sustentation dans les airs (7),
**caractérisée en ce que**, après ladite étape de commande manuelle (21) et après ladite étape de détection (22), ladite méthode (20) comporte une étape de gestion (26) consistant à commander automatiquement la vitesse NR selon au moins deux vitesses prédéterminées NR1, NR2 distinctes l'une de l'autre, lesdites au moins deux vitesses prédéterminées NR1, NR2 étant alternativement sélectionnées en fonction, d'une part, de ladite consigne de commande C fournie par l'organe de commande (4) et, d'autre part, de l'état courant détecté dudit giravion (3), ladite étape de gestion (26) permettant de commander la vitesse NR selon :
• une première vitesse NR1 lorsque la consigne de commande C fournie par l'organe de commande (4) est supérieure à une première valeur de seuil prédéterminée C1,
• une deuxième vitesse NR2 inférieure à ladite première vitesse NR1 lorsque les deux conditions suivantes sont vérifiées :
- la consigne de commande C fournie par l'organe de commande (4) est inférieure ou égale à ladite première valeur de seuil prédéterminée C1, et
- l'état courant détecté dudit giravion (3) correspond audit état "sol".

11. Méthode selon la revendication 10,
**caractérisée en ce que** ladite étape de gestion (26) commande la vitesse NR selon une troisième vitesse NR3 inférieure à ladite deuxième vitesse NR2 lorsque la consigne de commande C fournie par l'organe de commande (4) est inférieure ou égale à une deuxième valeur de seuil prédéterminée C2 et quand l'état courant détecté dudit giravion (3) correspond audit état "sol", ladite deuxième valeur de seuil prédéterminée C2 étant inférieure à ladite première valeur de seuil prédéterminée C1.

12. Méthode selon l'une quelconque des revendications 10 à 11,
**caractérisée en ce que** ladite étape de gestion (26) commande la vitesse NR, au moins temporairement, selon une quatrième vitesse NR4 supérieure à ladite première vitesse NR1 lorsqu'un organe de sélection (14) est actionné manuellement par un pilote, ledit organe de sélection (14) étant agencé au niveau d'un panneau supérieur d'un cockpit dudit giravion.

13. Méthode selon l'une quelconque des revendications 10 à 12,
**caractérisée en ce que** ladite méthode (20) comporte une étape de vérification (23) pour vérifier, à intervalle de temps régulier, un état de fonctionnement d'un moteur (9) dudit giravion (3) permettant d'entrainer en rotation ledit au moins un rotor principal (2), ladite étape de vérification (23) étant apte à transmettre à l'étape de gestion (26) une information représentative d'une panne du moteur pour permettre à ladite étape de gestion (26) d'inhiber une réduction de la vitesse NR lorsque l'état courant détecté correspond à l'état "sol".

14. Méthode selon l'une quelconque des revendications 10 à 13,
**caractérisée en ce que** ladite méthode (20) comporte une étape de calcul (24) pour calculer, à intervalle de temps régulier, une vitesse absolue de déplacement dudit giravion (3), ladite étape de gestion (26) permettant de commander la vitesse NR selon :
• ladite première vitesse NR1 lorsque les deux conditions suivantes sont vérifiées :
- l'état courant détecté du giravion correspond à l'état "sol",
- la vitesse absolue de déplacement du giravion (3) est supérieure à une vitesse absolue de déplacement prédéterminée V1,
• ladite deuxième vitesse NR2 lorsque les trois conditions suivantes sont vérifiées :
- la consigne de commande C fournie par l'organe de commande (4) est inférieure ou égale à ladite première valeur de seuil prédéterminée C1,
- l'état courant détecté dudit giravion (3) correspond audit état "sol", et
- la vitesse absolue de déplacement du giravion (3) est inférieure ou égale à ladite vitesse absolue de déplacement prédéterminée V1.

15. Méthode selon l'une quelconque des revendications 10 à 14,
**caractérisée en ce que** ladite méthode (20) comporte une étape de mesure (25) pour mesurer, à intervalle de temps régulier, une altitude dudit giravion (3) par rapport au sol, ladite étape de gestion (26) permettant de commander la vitesse NR selon :
• ladite première vitesse NR1 lorsque les deux conditions suivantes sont vérifiées :
- l'état courant détecté du giravion correspond à l'état "sol",
- l'altitude du giravion (3) par rapport au sol est supérieure à une altitude prédéterminée A1,
• ladite deuxième vitesse NR2 lorsque les trois conditions suivantes sont vérifiées :
- la consigne de commande C fournie par l'organe de commande (4) est inférieure ou égale à ladite première valeur de seuil prédéterminée C1,
- l'état courant détecté dudit giravion (3) correspond audit état "sol", et
- l'altitude du giravion (3) par rapport au sol est inférieure ou égale à ladite altitude prédéterminée A1.

## Patentansprüche

1. Vorrichtung (1) zur Regelung der Drehzahl, genannt Drehzahl NR, mindestens eines Hauptrotors (2) eines Drehflügelflugzeugs (3), wobei das Drehflügelflugzeug (3) aufweist:
• mindestens ein manuelles Flugsteuerungselement (4) zum Bereitstellen eines Steuerungssollwertes C der kollektiven Verstellung der Rotorblätter (5) des mindestens einen Hauptrotors (2), wobei der Steuerungssollwert C von einer aktuellen Stellung des mindestens einen Steuerungselements (4) abhängt, und
• Erfassungsmittel (8), die es ermöglichen, einen aktuellen Zustand von mindestens zwei verschiedenen Zuständen des Drehflügelflugzeugs (3) zu erfassen, d.h., einen Zustand "am Boden", in dem das Drehflügelflugzeug (3) zumindest teilweise den Boden (6) berührt, und einen Zustand "im Flug", in dem das Drehflügelflugzeug (3) zumindest in der Luft (7) schwebt,
**dadurch gekennzeichnet, dass** die Vorrichtung zur Regelung der Drehzahl NR Regelvorrichtungen (10) aufweist zum automatischen Steuern der Drehzahl NR gemäß mindestens zwei vorbestimmten Drehzahlen NR1, NR2, die voneinander verschieden sind, wobei die mindestens zwei vorbestimmten Geschwindigkeiten NR1, NR2 abwechselnd ausgewählt werden in Abhängigkeit von einerseits dem Steuerungssollwert C, der von dem Steuerungselement (4) geliefert wird, und andererseits dem aktuellen Zustand des Drehflügelflugzeugs (3), der von den Erfassungsmitteln (8) erfasst wurde, wobei die Regelungsmittel (10) es ermöglichen, die Drehzahl NR zu steuern, gemäß:
• einer ersten Drehzahl NR1, wenn der von dem Steuerungselement (4) gelieferte Steuerungssollwert C größer ist als ein erster vorbestimmter Schwellenwert C1,
• einer zweiten Drehzahl NR2, die kleiner ist als die erste Drehzahl NR1, wenn die beiden folgenden Bedingungen bestätigt sind:
- der Steuerungssollwert C, der von dem Steuerungselement (4) geliefert wird, ist kleiner oder gleich dem ersten vorbestimmten Schwellenwert C1, und
- der erfasste aktuelle Zustand des Drehflügelflugzeugs (3) entspricht dem Zustand "am Boden".

2. Vorrichtung nach Anspruch 1,
**dadurch gekennzeichnet, dass** die Regelungsmittel (10) die Drehzahl NR gemäß einer dritten Drehzahl NR3 steuern, die kleiner als die zweite Drehzahl NR2 ist, wenn der von dem Steuerungselement (4) gelieferte Steuerungssollwert C kleiner oder gleich einem zweiten vorbestimmten Schwellenwert C2 ist und wenn der erfasste aktuelle Zustand des Drehflügelflugzeugs (3) dem Zustand "am Boden" entspricht, wobei der zweite vorbestimmte Schwellenwert C2 kleiner als der erste vorbestimmte Schwellenwert C1 ist.

3. Vorrichtung nach einem der Ansprüche 1 bis 2,
**dadurch gekennzeichnet, dass** das Drehflügelflugzeug (3) ein Auswahlelement (14) aufweist, das es ermöglicht, wenn das Auswahlelement (14) von einem Piloten des Drehflügelflugzeugs betätigt wird, manuell einen Befehl an die Regelungsmittel (10) zu liefern, um, zumindest zeitweise, die Drehzahl NR gemäß einer vierten Drehzahl NR4 zu steuern, die größer als die erste Drehzahl NR1 ist.

4. Vorrichtung nach einem der Ansprüche 1 bis 3,
**dadurch gekennzeichnet, dass** die Vorrichtung (1) Überprüfungsmittel (11) aufweist zum Überprüfen, in regelmäßigen Zeitabständen, eines Betriebszustands eines Motors (9) des Drehflügelflugzeugs (3), der den mindestens einen Hauptrotor (2) drehen kann, wobei die Überprüfungsmittel (11) an die Regelungsmittel (10) eine Information übermitteln können, die einen Motorschaden angibt, um es den Regelungsmitteln (10) zu ermöglichen, eine Verminderung der Drehzahl NR zu verhindern, wenn der erfasste aktuelle Zustand einem Zustand "am Boden" entspricht.

5. Vorrichtung nach einem der Ansprüche 1 bis 4,
**dadurch gekennzeichnet, dass** die Vorrichtung Rechenmittel (12) aufweist zum Berechnen, in regelmäßigen Zeitabständen, einer absoluten Fortbewegungsgeschwindigkeit des Drehflügelflugzeugs (3), wobei die Regelungsmittel (10) es ermöglichen, die Drehzahl NR zu steuern, gemäß:
• der ersten Drehzahl NR1, wenn die folgenden zwei Bedingungen bestätigt sind:
- der erfasste aktuelle Zustand des Drehflügelflugzeugs entspricht dem Zustand "am Boden",
- die absolute Fortbewegungsgeschwindigkeit des Drehflügelflugzeugs (3) ist größer als eine vorbestimmte absolute Fortbewegungsgeschwindigkeit V1,
• der zweiten Drehzahl NR2, wenn die folgenden drei Bedingungen bestätigt sind:
- der von dem Steuerungselement (4) gelieferte Steuerungssollwert C ist kleiner oder gleich dem ersten vorbestimmten Schwellenwert C1,
- der erfasste aktuelle Zustand des Drehflügelflugzeugs (3) entspricht dem Zustand "am Boden", und
- die absolute Fortbewegungsgeschwindigkeit des Drehflügelflugzeugs (3) ist kleiner oder gleich der vorbestimmten absoluten Fortbewegungsgeschwindigkeit V1.

6. Vorrichtung nach einem der Ansprüche 1 bis 5,
**dadurch gekennzeichnet, dass** die Vorrichtung Messmittel (15) aufweist zum Messen, in regelmäßigen Zeitabständen, einer Höhe über dem Boden des Drehflügelflugzeugs (3), wobei die Regelungsmittel (10) es ermöglichen, die Drehzahl NR zu steuern, gemäß:
• der ersten Drehzahl NR1, wenn die folgenden zwei Bedingungen bestätigt sind:
- der erfasste aktuelle Zustand des Drehflügelflugzeugs entspricht dem Zustand "am Boden",
- die Höhe über dem Boden des Drehflügelflugzeugs (3) ist größer als eine vorbestimmte Höhe A1,
• der zweiten Drehzahl NR2, wenn die folgenden drei Bedingungen bestätigt sind:
- der von dem Steuerungselement (4) gelieferte Steuerungssollwert C ist kleiner oder gleich dem ersten vorbestimmten Schwellenwert C1,
- der erfasste aktuelle Zustand des Drehflügelflugzeugs (3) entspricht dem Zustand "am Boden", und
- die Höhe über dem Boden des Drehflügelflugzeugs (3) ist kleiner oder gleich der vorbestimmten Höhe A1.

7. Vorrichtung nach einem der Ansprüche 1 bis 6,
**dadurch gekennzeichnet, dass** der erste vorbestimmte Schwellenwert C1 in einem Wertebereich zwischen 30 und 60% eines maximalen Sollwertes liegt, der einer Extremalposition des Steuerungselement (4) entspricht.

8. Vorrichtung nach Anspruch 2,
**dadurch gekennzeichnet, dass** der zweite vorbestimmte Schwellenwert C2 in einem Wertebereich zwischen 15 und 40% eines maximalen Sollwertes liegt, der einer Extremalposition des Steuerungselements (4) entspricht.

9. Drehflügelflugzeug (3) mit:
• mindestens einem Hauptrotor (2), der von mindestens einem Motor (9) angetrieben wird,
• mindestens einem manuellen Flugsteuerungselement zum Bereitstellen eines Steuerungssollwerts C der kollektiven Verstellung von Rotorblättern (5) des mindestens einen Hauptrotors (2), wobei der Steuerungssollwert C von einer aktuellen Stellung des mindestens einen Steuerungselements (4) abhängt, und
• Erfassungsmittel (8), die es ermöglichen, einen aktuellen Zustand von mindestens zwei verschiedenen Zuständen des Drehflügelflugzeugs (3) zu erfassen, d.h. einen Zustand "am Boden", in dem das Drehflügelflugzeug (3) mindestens teilweise den Boden (6) berührt, und einen Zustand "im Flug", in dem das Drehflügelflugzeug (3) zumindest in der Luft (7) schwebt,
**dadurch gekennzeichnet, dass** das Drehflügelflugzeug (3) eine Vorrichtung (1) zur Regelung der Drehzahl NR nach einem der Ansprüche 1 bis 8 aufweist.

10. Verfahren (20) zur Regelung der Drehzahl, genannt Drehzahl NR, mindestens eines Hauptrotors (2) eines Drehflügelflugzeugs (3), wobei das Verfahren (20) mindestens die folgenden Schritte aufweist:
• einen Schritt der manuellen Flugsteuerung (21), um einen Steuerungssollwert C der kollektiven Verstellung der Rotorblätter (5) des mindestens einen Hauptrotors (2) bereitzustellen, wobei der Steuerungssollwert C von einer aktuellen Stellung mindestens eines Steuerungselements (4) abhängt,
• einem Erfassungsschritt (22), der darin besteht, einen aktuellen Zustand von mindestens zwei verschiedenen Zuständen des Drehflügelflugzeugs (3) zu erfassen, d.h., einen Zustand "am Boden", in dem das Drehflügelflugzeug (3) zumindest teilweise den Boden (6) berührt, und einen Zustand "im Flug", in dem das Drehflügelflugzeug (3) zumindest in der Luft (7) schwebt,
**dadurch gekennzeichnet, dass** nach dem Schritt der manuellen Steuerung (21) und nach dem Schritt der Erfassung (22), das Verfahren (20) einen Regelungsschritt (26) aufweist, der darin besteht, automatisch die Drehzahl NR gemäß mindestens zwei vorbestimmten, voneinander verschiedenen Drehzahlen NR1, NR2 zu steuern, wobei die mindestens zwei vorbestimmten Drehzahlen NR1, NR2 abwechselnd ausgewählt werden in Abhängigkeit von einerseits dem Steuerungssollwert C, der von dem Steuerungselement (4) geliefert wird, und andererseits dem erfassten aktuellen Zustand des Drehflügelflugzeugs (3), wobei der Regelungsschritt (26) es ermöglicht, die Drehzahl NR zu steuern, gemäß:
• einer ersten Geschwindigkeit NR1, wenn der von dem Steuerungselement (4) gelieferte Steuerungssollwert C größer ist als ein erster vorbestimmter Schwellenwert C1,
• einer zweiten Drehzahl NR2, die kleiner ist als die erste Drehzahl NR1, wenn die beiden folgenden Bedingungen bestätigt sind:
- der Steuerungssollwert C, der von dem Steuerungselement (4) geliefert wird, ist kleiner oder gleich dem ersten vorbestimmten Schwellenwert C1, und
- der erfasste aktuelle Zustand des Drehflügelflugzeugs (3) entspricht dem Zustand "am Boden".

11. Verfahren nach Anspruch 10,
**dadurch gekennzeichnet, dass** der Regelungsschritt (26) die Drehzahl NR gemäß einer dritten Drehzahl NR3 steuert, die kleiner als die zweite Drehzahl NR2 ist, wenn der von dem Steuerungselement (4) gelieferte Steuerungssollwert C kleiner oder gleich einem zweiten vorbestimmten Schwellenwert C2 ist und wenn der erfasste aktuelle Zustand des Drehflügelflugzeugs (3) dem Zustand "am Boden" entspricht, wobei der zweite vorbestimmte Schwellenwert C2 kleiner als der erste vorbestimmte Schwellenwert C1 ist.

12. Verfahren nach einem der Ansprüche 10 bis 11,
**dadurch gekennzeichnet, dass** der Regelungsschritt (26) die Drehzahl NR, zumindest zeitweise, gemäß einer vierten Drehzahl NR4 steuert, die größer als die erste Drehzahl NR1 ist, wenn ein Auswahlelement (14) manuell von einem Piloten betätigt wurde, wobei das Auswahlelement (14) auf einer oberen Armaturentafel eines Cockpits des Drehflügelflugzeugs angeordnet ist.

13. Verfahren nach einem der Ansprüche 10 bis 12,
**dadurch gekennzeichnet, dass** das Verfahren (20) einen Überprüfungsschritt (23) aufweist, zum Überprüfen, in regelmäßigen Zeitabständen, eines Betriebszustands eines Motors (9) des Drehflügelflugzeugs (3), der den mindestens einen Hauptrotor (2) drehen kann, wobei der Überprüfungsschritt (23) während des Regelungsschritts (26) eine Information übertragen kann, die einen Motorschaden angibt, um es dem Regelungsschritt (26) zu ermöglichen, eine Verringerung der Geschwindigkeit NR zu verhindern, wenn der erfasste aktuelle Zustand dem Zustand "am Boden" entspricht.

14. Verfahren nach einem der Ansprüche 10 bis 13,
**dadurch gekennzeichnet, dass** das Verfahren (20) einen Rechenschritt (24) aufweist zum Berechnen, in regelmäßigen Zeitabständen, einer absoluten Fortbewegungsgeschwindigkeit des Drehflügelflugzeugs (3), wobei der Regelungsschritt (26) es ermöglicht, die Drehzahl NR zu steuern, gemäß:
• der ersten Drehzahl NR1, wenn die folgenden zwei Bedingungen bestätigt sind:
- der erfasste aktuelle Zustand des Drehflügelflugzeugs entspricht dem Zustand "am Boden",
- die absolute Fortbewegungsgeschwindigkeit des Drehflügelflugzeugs (3) ist größer als eine vorbestimmte absolute Fortbewegungsgeschwindigkeit V1,
• der zweiten Drehzahl NR2, wenn die folgenden drei Bedingungen bestätigt sind:
- der von dem Steuerungselement (4) gelieferte Steuerungssollwert C ist kleiner oder gleich dem ersten vorbestimmten Schwellenwert C1,
- der erfasste aktuelle Zustand des Drehflügelflugzeugs (3) entspricht dem Zustand "am Boden", und
- die absolute Fortbewegungsgeschwindigkeit des Drehflügelflugzeugs (3) ist kleiner oder gleich der vorbestimmten absoluten Fortbewegungsgeschwindigkeit V1.

15. Verfahren nach einem der Ansprüche 10 bis 14,
**dadurch gekennzeichnet, dass** das Verfahren (20) einen Messschritt (25) aufweist zum Messen, in regelmäßigen Zeitabständen, einer Höhe über dem Boden des Drehflügelflugzeugs (3), wobei der Regelungsschritt (26) es ermöglicht, die Drehzahl NR zu steuern, gemäß:
• der ersten Drehzahl NR1, wenn die folgenden zwei Bedingungen bestätigt sind:
- der erfasste aktuelle Zustand des Drehflügelflugzeugs entspricht dem Zustand "am Boden",
- die Höhe über dem Boden des Drehflügelflugzeugs (3) ist größer als eine vorbestimmte Höhe A1,
• der zweiten Drehzahl NR2, wenn die folgenden drei Bedingungen bestätigt sind:
- der von dem Steuerungselement (4) gelieferte Steuerungssollwert C ist kleiner oder gleich dem ersten vorbestimmten Schwellenwert C1,
- der erfasste aktuelle Zustand des Drehflügelflugzeugs (3) entspricht dem Zustand "am Boden", und
- die Höhe über dem Boden des Drehflügelflugzeugs (3) ist kleiner oder gleich der vorbestimmten Höhe A1.

## Claims

1. Device for regulating (1) the speed of rotation, called speed NR, of at least one main rotor (2) of a rotorcraft (3), said rotorcraft (3) comprising:
• at least one manual flight control member (4) for delivering a control setpoint C for the collective pitch of the blades (5) of said at least one main rotor (2), said control setpoint C being a function of a current position of said at least one control member (4), and
• detection means (8) enabling detection of a current state from at least two distinct states of said rotorcraft (3), namely a "ground" state in which said rotorcraft (3) is at least partially in contact with the ground (6) and a "flight" state in which said rotorcraft (3) is at least being sustained in the air (7),
**characterised in that** said device for regulating the speed NR comprises management means (10) for automatically controlling the speed NR according to at least two mutually distinct predetermined speeds NR1, NR2, said at least two predetermined speeds NR1, NR2 being alternatively selected as a function, on the one hand, of said control setpoint C delivered by the control member (4) and, on the other hand, of the current state of said rotorcraft (3) detected by said detection means (8), said management means (10) enabling the speed NR to be controlled according to:
• a first speed NR1 when the control setpoint C delivered by the control member (4) is greater than a first predetermined threshold value C1,
• a second speed NR2 less than said first speed NR1 when the following two conditions are satisfied:
- the control setpoint C delivered by the control member (4) is less than or equal to said first predetermined threshold value C1, and
- the detected current state of said rotorcraft (3) corresponds to said "ground" state.

2. Device according to claim 1,
**characterised in that** said management means (10) control the speed NR according to a third speed NR3 less than said second speed NR2 when the control setpoint C delivered by the control member (4) is less than or equal to a second predetermined threshold value C2 and when the detected current state of said rotorcraft (3) corresponds to said "ground" state, said second predetermined threshold value C2 being less than said first predetermined threshold value C1.

3. Device according to any one of claims 1 to 2,
**characterised in that** said rotorcraft (3) comprises a selection member (14) enabling, when said selection member (14) is actuated by a pilot of said rotorcraft, an instruction to be manually delivered to said management means (10) in order to control, at least temporarily, said speed NR according to a fourth speed NR4 greater than said first speed NR1.

4. Device according to any one of claims 1 to 3,
**characterised in that** said device (1) comprises verification means (11) for verifying, at a regular time intervals, an operating state of an engine (9) of said rotorcraft (3) enabling said at least one main rotor (2) to be driven in rotation, said verification means (11) being suitable for transmitting to said management means (10) information representative of an engine failure in order to enable said management means (10) to inhibit a reduction of the speed NR when the detected current state corresponds to the "ground" state.

5. Device according to any one of claims 1 to 4,
**characterised in that** said device comprises calculation means (12) for calculating, at regular time intervals, an absolute travel speed of said rotorcraft (3), said management means (10) enabling said speed NR to be controlled according to:
• said first speed NR1 when the following two conditions are satisfied:
- the detected current state of the rotorcraft corresponds to the "ground" state,
- the absolute travel speed of the rotorcraft (3) is greater than a predetermined absolute travel speed V1,
• said second speed NR2 when the following three conditions are satisfied:
- the control setpoint C delivered by the control member (4) is less than or equal to said first predetermined threshold value C1,
- the detected current state of said rotorcraft (3) corresponds to said "ground" state, and
- the absolute travel speed of the rotorcraft (3) is less than or equal to said predetermined absolute travel speed V1.

6. Device according to any one of claims 1 to 5, **characterised in that** said device comprises measurement means (15) for measuring, at regular time intervals, an altitude of said rotorcraft (3) relative to the ground, said management means (10) enabling the speed NR to be controlled according to:
• said first speed NR1 when the following two conditions are satisfied:
- the detected current state of the rotorcraft corresponds to the "ground" state,
- the altitude of the rotorcraft (3) relative to the ground is greater than a predetermined altitude A1,
• said second speed NR2 when the following three conditions are satisfied:
- the control setpoint C delivered by the control member (4) is less than or equal to said first predetermined threshold value C1,
- the detected current state of said rotorcraft (3) corresponds to said "ground" state, and
- the altitude of the rotorcraft (3) relative to the ground is less than or equal to said predetermined altitude A1.

7. Device according to any one of claims 1 to 6, **characterised in that** said first predetermined threshold value C1 lies in a range of values comprised between 30 and 60% of a maximum setpoint corresponding to an extreme position of the control member (4).

8. Device according to claim 2,
**characterised in that** said second predetermined threshold value C2 lies in a range of values comprised between 15 and 40% of a maximum setpoint corresponding to an extreme position of the control member (4).

9. Rotorcraft (3) comprising:
• at least one main rotor (2) driven by at least one engine (9),
• at least one manual flight control member (4) for delivering a control setpoint C for the collective pitch of the blades (5) of said at least one main rotor (2), said control setpoint C being a function of a current position of said at least one control member (4), and
• detection means (8) enabling detection of a current state from at least two distinct states of said rotorcraft (3), namely a "ground" state in which said rotorcraft (3) is at least partially in contact with the ground (6) and a "flight" state in which said rotorcraft (3) is at least being sustained in the air (7),
**characterised in that** said rotorcraft (3) comprises a device for regulating (1) the speed NR according to any one of claims 1 to 8.

10. Method of regulating (20) the speed of rotation, called speed NR, of at least one main rotor (2) of a rotorcraft (3), said method (20) comprising at least the steps consisting of:
• a manual flight control step (21) for delivering a control setpoint C for the collective pitch of the blades (5) of said at least one main rotor (2), said control setpoint C being a function of a current position of at least one control member (4),
• a detection step (22) consisting of detecting a current state from at least two distinct states of said rotorcraft (3), namely a "ground" state in which said rotorcraft (3) is at least partially in contact with the ground (6) and a "flight" state in which said rotorcraft (3) is at least being sustained in the air (7),
**characterised in that**, after said manual control step (21) and after said detection step (22), said method (20) comprises a management step (26) consisting of automatically controlling the speed NR according to at least two mutually distinct predetermined speeds NR1, NR2, said at least two predetermined speeds NR1, NR2 being alternatively selected as a function, on the one hand, of said control setpoint C delivered by the control member (4) and, on the other hand, of the detected current state of said rotorcraft (3), said management step (26) enabling the speed NR to be controlled according to:
• a first speed NR1 when the control setpoint C delivered by the control member (4) is greater than a first predetermined threshold value C1,
• a second speed NR2 less than said first speed NR1 when the following two conditions are satisfied:
- the control setpoint C delivered by the control member (4) is less than or equal to said first predetermined threshold value C1, and
- the detected current state of said rotorcraft (3) corresponds to said "ground" state.

11. Method according to claim 10,
**characterised in that** said management step (26) controls the speed NR according to a third speed NR3 less than said second speed NR2 when the control setpoint C delivered by the control member (4) is less than or equal to a second predetermined threshold value C2 and when the detected current state of said rotorcraft (3) corresponds to said "ground" state, said second predetermined threshold value C2 being less than said first predetermined threshold value C1.

12. Method according to any one of claims 10 to 11,
**characterised in that** said management step (26) controls the speed NR, at least temporarily, according to a fourth speed NR4 greater than said first speed NR1 when a selection member (14) is manually actuated by a pilot, said selection member (14) being arranged at the level of an upper panel of a cockpit of said rotorcraft.

13. Method according to any one of claims 10 to 12,
**characterised in that** said method (20) comprises a verification step (23) for verifying, at regular time intervals, an operating state of an engine (9) of said rotorcraft (3) enabling said at least one main rotor (2) to be driven in rotation, said verification step (23) being suitable for transmitting to said management step (26) information representative of an engine failure in order to enable said management step (26) to inhibit a reduction of the speed NR when the detected current state corresponds to the "ground" state.

14. Method according to any one of claims 10 to 13,
**characterised in that** said method (20) comprises a calculation step (24) for calculating, at regular time intervals, an absolute travel speed of said rotorcraft (3), said management step (26) enabling said speed NR to be controlled according to:
• said first speed NR1 when the following two conditions are satisfied:
- the detected current state of the rotorcraft corresponds to the "ground" state,
- the absolute travel speed of the rotorcraft (3) is greater than a predetermined absolute travel speed V1,
• said second speed NR2 when the following three conditions are satisfied:
- the control setpoint C delivered by the control member (4) is less than or equal to said first predetermined threshold value C1,
- the detected current state of said rotorcraft (3) corresponds to said "ground" state, and
- the absolute travel speed of the rotorcraft (3) is less than or equal to said predetermined absolute travel speed V1.

15. Method according to any one of claims 10 to 14,
**characterised in that** said method (20) comprises a measurement step (25) for measuring, at regular time intervals, an altitude of said rotorcraft (3) relative to the ground, said management step (26) enabling the speed NR to be controlled according to:
• said first speed NR1 when the following two conditions are satisfied:
- the detected current state of the rotorcraft corresponds to the "ground" state,
- the altitude of the rotorcraft (3) relative to the ground is greater than a predetermined altitude A1,
• said second speed NR2 when the following three conditions are satisfied:
- the control setpoint C delivered by the control member (4) is less than or equal to said first predetermined threshold value C1,
- the detected current state of said rotorcraft (3) corresponds to said "ground" state, and
- the altitude of the rotorcraft (3) relative to the ground is less than or equal to said predetermined altitude A1.
